# EUROPÄISCHE PATENTANMELDUNG

(11) **EP 1 878 898 A1**
(43) Veröffentlichungstag der Anmeldung: **16.01.2008**
(21) Anmeldenummer: 07110618.1
(22) Anmeldetag: 20.06.2007
(51) Int. Cl.: F02D 41/12, F02D 41/34

(54) **Adaptionsverfahren zur optimierten Verbrennung einer in einen Zylinder einer Brennkraftmaschine eingespritzten Kraftstoffmenge**

(30) Priorität: 12.07.2006 DE 102006032278
(71) Anmelder: Siemens VDO Automotive AG, 93055 Regensburg (DE)
(72) Erfinder: Birkner, Christian, Dr., 93173 Irlbach (DE); Fokkelman, Joris, 93105 Tegernheim (DE); Müller, Karl, Dr., 30173 Hannover (DE)

(57) **Zusammenfassung**

Die vorliegende Erfindung liefert ein Adaptionsverfahren einer Brennkraftmaschine zur optimierten Verbrennung. Durch Bestimmen der Drehzahländerung der Brennkraftmaschine innerhalb einer Schubphase und durch Zuordnen dieser Drehzahländerungen zu den Zylinder spezifischen Verdichtungsphasen 20 werden die tatsächlich zugeführten Zylinder spezifischen Luftmassen bestimmt. Dieser öffnet die Möglichkeit, die einzuspritzende Kraftstoffmenge an die vorhandenen Zylinder spezifische Luftmasse genauer anzupassen.

## Beschreibung

Die vorliegende Erfindung betrifft ein Adaptionsverfahren einer Brennkraftmaschine zur optimierten Verbrennung einer in einen Zylinder der Brennkraftmaschine eingespritzten Kraftstoffmenge.

In einer Brennkraftmaschine wird gewöhnlich ein Luftmassensensor eingesetzt, um die der Brennkraftmaschine bereitgestellte und bei der Verbrennung verbrauchte Luftmasse zu bestimmen. Um den Schadstoffausstoß der Brennkraftmaschine bestimmen und beeinflussen zu können, ist die Kenntnis des den einzelnen Zylindern zugeführten Luft-Kraftstoff-Gemischs erforderlich. Des Weiteren ist der in den Zylindern herrschende Druck eine wesentliche Hilfsgröße, um die Art und die Menge der Emissionen der Brennkraftmaschine vorhersagen zu können. Derzeit ist der Luftmassenstrom einer Brennkraftmaschine nur als ein Mittelwert über alle Zylinder der Brennkraftmaschine bekannt, wenn nicht pro Zylinder ein einzelner Luftmassensensor eingesetzt wird. Die Verwendung eines einzelnen Luftmassensensors pro Zylinder ist jedoch kostenintensiv und daher für die Massenproduktion von Fahrzeugen gerade des unteren Preissegments nicht geeignet.

Es ist jedoch allgemein bekannt, dass Toleranzen in der Zylindergeometrie und Unterschiede in den Verdichtungsraten der einzelnen Zylinder zu ungenauen Informationen über die tatsächlich den einzelnen Zylindern zugeführte Luftmasse führt. Zudem ist aus diesen Informationen nicht genau ableitbar, welche Druckverhältnisse tatsächlich in jedem einzelnen Zylinder herrschen. Diese unvollständigen Informationen führen automatisch zu ungenauen Kenntnissen der stattfindenden Verbrennung und des Luft-Kraftstoff-Gemischs.

Als Ergebnis der obigen Situation entsteht der Nachteil, dass die spezifischen Bedingungen in den einzelnen Zylindern einer Brennkraftmaschine nicht bekannt sind, um Schadstoffemissionen der Brennkraftmaschine zu reduzieren.

Es ist daher die Aufgabe der vorliegenden Erfindung, ein Verfahren bereitzustellen, durch das die Bedingungen in der Brennkraftmaschine im Vergleich zum Stand der Technik besser erfassbar sind, um auf dieser Grundlage die Schadstoffemissionen der Brennkraftmaschine weiter reduzieren zu können.

Die obige Aufgabe wird durch das Adaptionsverfahren gemäß dem unabhängigen Patentanspruch 1 gelöst. Vorteilhafte Ausgestaltungen dieses Verfahrens gehen aus der folgenden Beschreibung, den Zeichnungen und den anhängenden Ansprüchen hervor.

Das erfindungsgemäße Adaptionsverfahren einer Brennkraftmaschine zur optimierten Verbrennung einer in einen Zylinder eingespritzten Kraftstoffmenge umfasst die folgenden Schritte: Erkennen einer Schubphase der Brennkraftmaschine, Bestimmen einer zeitlichen Drehzahländerung der Brennkraftmaschine innerhalb der Schubphase und Zuordnen der zeitlichen Drehzahländerung zu einer Zylinder spezifischen Verdichtungsphase der Brennkraftmaschine, Ermitteln einer Zylinder spezifischen Luft/Gasfüllung ausgehend von der zeitlichen Drehzahländerung in der Zylinder spezifischen Verdichtungsphase und Anpassen eines Zylinder spezifischen Kraftstoff-Luft-Gemischs basierend auf der ermittelten Zylinder spezifischen Luft/Gasfüllung. Das vorliegende Adaptionsverfahren basiert auf dem Ansatz, dass die Luftzufuhr zu den Zylindern der Brennkraftmaschine Zylinder spezifisch betrachtet wird, anstatt eine globale Auswertung der Luftzufuhr über alle Zylinder der Brennkraftmaschine durchzuführen. Diese Zylinder spezifische Auswertung liefert konkrete Ergebnisse, welche Luftmenge tatsächlich in die einzelnen Zylinder gelangt und dann dort für eine Verbrennung zur Verfügung steht. Die Charakterisierung der Zylinder spezifischen Luftmenge wird indirekt über einen standardmäßig im Kraftfahrzeug installierten Sensor durchgeführt. Dies ist der Drehzahlsensor, mit dessen Hilfe die unterschiedlichen Takte eines Zyklus der Brennkraftmaschine analysierbar sind. Wird nämlich die Drehzahländerung der Brennkraftmaschine bezogen auf eine Zylinder spezifische Verdichtungsphase betrachtet, erhält man ein Maß für die in diesem Zylinder verarbeitete Luftmasse. Um die Auswertung nach obigem Verfahren zu vereinfachen, wird die Brennkraftmaschine in einer Schubphase untersucht. Innerhalb dieser Schubphase werden keine Kraftstoffmengen in die einzelnen Zylinder eingespritzt, so dass über diesen Weg keine Beeinflussung der auszuwertenden Daten zu erwarten ist. Nachdem man aus der Auswertung der Zylinder spezifischen Drehzahländerung nähere Auskünfte über die Zylinder spezifische Luft/Gasfüllung erhalten hat, wird die in den einzelnen Zylindern einzuspritzende Kraftstoffmenge entsprechend angepasst, um das tatsächlich gewünschte Kraftstoff-LuftGemisch in den einzelnen Zylindern der Brennkraftmaschine zu erzielen.

Gemäß einer weiteren Ausgestaltung des vorliegenden Adaptionsverfahrens werden die folgenden Schritte durchgeführt: Erfassen der Drehzahl der Brennkraftmaschine in Abhängigkeit von der Zeit und Erfassen der Zylinder spezifischen Verdichtungsphasen der Brennkraftmaschine in Abhängigkeit von der Zeit.

Um den ermittelten Verlauf des Drehzahlsignals in obigem Adaptionsverfahren interpretieren zu können, sind die weiteren Schritte bevorzugt: Kalibrieren der Verdichtungsarbeit eines Zylinders in Abhängigkeit von seiner Luft/Gasfüllung, Kalibrieren der Drehzahländerung in Abhängigkeit von der Verdichtungsarbeit und/oder Aufstellen eines funktionellen Zusammenhangs zwischen der Drehzahländerung und der Zylinder spezifischen Luft/Gasfüllung in der Verdichtungsphase der Brennkraftmaschine.

Bevorzugte Ausführungsformen der vorliegenden Erfindung werden unter Bezugnahme auf die begleitenden Zeichnungen näher erläutert. Es zeigen:
Figur 1 eine schematische Darstellung einer Drehzahländerung in Abhängigkeit von den einzelnen Phasen eines Arbeitszyklus einer Brennkraftmaschine und
Figur 2 ein Flussdiagramm einer bevorzugten Ausführungsform des vorliegenden Adaptionsverfahrens.

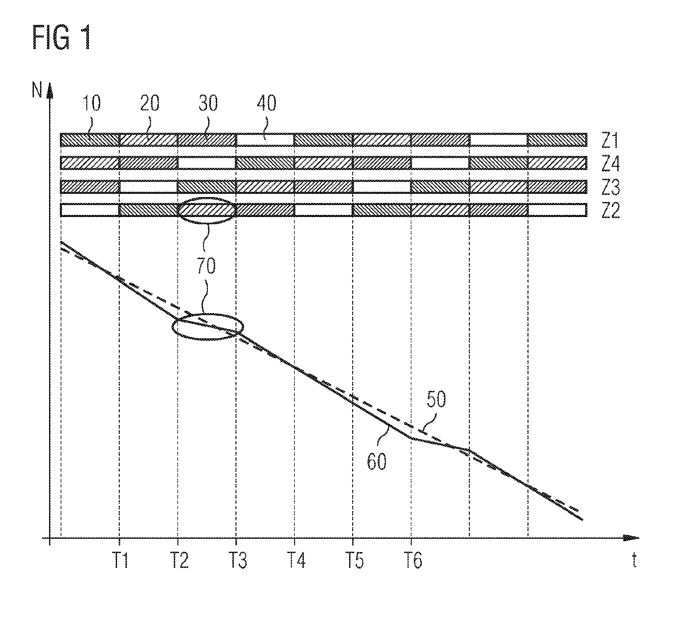

Eine bevorzugte Ausführungsform des vorliegenden Adaptionsverfahrens wird am Beispiel einer Vier-Zylinder-Brennkraftmaschine beschrieben. Ein Zyklus eines jeden Zylinders Z1, Z2, Z3, Z4 der Brennkraftmaschine unterteilt sich in eine Einlassphase 10, eine Verdichtungsphase 20, eine Arbeitsphase 30 und eine Auslass- oder Ausstoßphase 40 (vgl. Fig. 1). Der zeitliche Ablauf dieser Phasen 10, 20, 30, 40 der Brennkraftmaschine ist allgemein bekannt.

Nummeriert man die einzelnen Zylinder Z1, Z2, Z3 und Z4 der Brennkraftmaschine gemäß ihrer Zündfolge, durchläuft der erste Zylinder Z1 seine Verdichtungsphase 20 zwischen den Zeitpunkten T1 und T2. Die Arbeitsphase des ersten Zylinders Z1 wird am Zeitpunkt T2 gestartet. Gleichzeitig startet der zweite Zylinder Z2 seine Einlassphase 10 am Zeitpunkt T1 und seine Verdichtungsphase am Zeitpunkt T2. Die Zylinder Z3 und Z4 starten jeweils ihre Verdichtungsphase 20 an den Zeitpunkten T3 und T4. Somit durchläuft die Brennkraftmaschine nacheinander sich aneinander anschließende Verdichtungsphasen 20 der einzelnen Zylinder Z1, Z2, Z3, Z4. Nach dem Zeitpunkt T4 hat die Brennkraftmaschine einen vollständigen Arbeitszyklus durchlaufen, so dass sich beginnend am Zeitpunkt T5 der bereits bekannte Arbeitszyklus der Brennkraftmaschine und dessen zeitlicher Ablauf wiederholt.

Weist beispielsweise die Brennkraftmaschine mehr als vier Zylinder auf, ist ebenfalls die zeitliche Abfolge der Verdichtungsphasen 20 bestimmbar. Für eine weitere Unterscheidung können in diesem Fall nicht nur die einzelnen Zylinder, sondern auch die Aufteilung der Zylinder der Brennkraftmaschine auf beispielsweise unterschiedliche Zylinderbänke genutzt werden. Somit sind die Zylinder spezifischen Verdichtungsphasen einer Brennkraftmaschine ohne Schwierigkeiten bestimmten Zeitsignalen zuordenbar.

Jedes Kraftfahrzeug bzw. jede Brennkraftmaschine verfügt zudem über eine Standardausstattung zur Erfassung der Drehzahl N der Brennkraftmaschine in Abhängigkeit von der Zeit. Die Drehzahl N wird gemäß bekannter Verfahren gemessen, wie beispielsweise mit einem Kurbelwellen-Sensor basierend auf dem Hall-Effekt.

Innerhalb eines Schubbetriebs der Brennkraftmaschine wird kein Kraftstoff in die einzelnen Zylinder eingespritzt. Ein derartiger Schubbetrieb ist beispielsweise das Bergabrollen des Kraftfahrzeugs, während sich das Getriebe nicht im Leerlauf befindet. Somit findet innerhalb des Schubbetriebs der Brennkraftmaschine in den Arbeitsphasen 30 der Zylinder Z1, Z2, Z3 und Z4 keine Verbrennung statt. In dieser Arbeitsphase 30 erfolgt lediglich eine Ausdehnung der zuvor verdichteten Luft/Gasfüllung des jeweiligen Zylinders Z1, Z2, Z3, Z4. In der Schubphase ist somit die Verdichtungsphase 20 der einzelnen Zylinder Z1, Z2, Z3, Z4 diejenige Phase, in der der Luft/Gasfüllung der einzelnen Zylinder Z1, Z2, Z3, Z4 Energie zugeführt wird, die zu einer Abbremsung der Brennkraftmaschine führt. Vernachlässigt man die Energieübertragung in den anderen drei Phasen 10, 30, 40 der Zylinder Z1, Z2, Z3, Z4 oder nimmt man einen konstanten Drehzahlabfall an, wird im Schubbetrieb der Brennkraftmaschine deren Drehzahl N nur durch den Energieverbrauch in den Verdichtungsphasen 20 der einzelnen Zylinder Z1, Z2, Z3, Z4 (zusätzlich) verringert.

Die Stärke der Drehzahlverminderung in der Verdichtungsphase 20 wird durch die Zylinder spezifisch zu verrichtende Verdichtungsarbeit oder die Zylinder spezifische Verdichtungsrate bestimmt. Unterschiede in der Verdichtungsarbeit oder Verdichtungsrate der einzelnen Zylinder Z1, Z2, Z3, Z4 im Vergleich zueinander resultieren aus unterschiedlichen Geometrien des Zylinder spezifischen Luftpfads. Diese unterschiedlichen Geometrien des Zylinder spezifischen Luftpfads beeinflussen die den Zylindern Z1, Z2, Z3, Z4 zugeführten Luftmassen. Die obigen Unterschiede ergeben sich beispielsweise aus Herstellungstoleranzen, Strömungseinflüssen im Luftpfad und Alterungserscheinungen der Brennkraftmaschine, um nur einige Beispiele zu nennen.

Ist die zu verrichtende Verdichtungsarbeit oder Verdichtungsrate in einem der Zylinder Z1, Z2, Z3, Z4 größer als in einem anderen Zylinder der Brennkraftmaschine, führt dies zu einem stärkeren Drehzahlabfall im Zeitfenster der Zylinder spezifischen Verdichtungsphase 20 in der Schubphase der Brennkraftmaschine. Dies ist am Bezugszeichen 70 in Fig. 1 dargestellt. Befindet sich die Brennkraftmaschine im Schubbetrieb, verringert sich die Drehzahl N mit der Zeit t. Misst man dies über alle Zylinder Z1, Z2, Z3, Z4 gemeinsam, ergibt sich ein stetiger Drehzahlabfall, der durch die gepunktete Linie 50 in Fig. 1 dargestellt ist. Für die gepunktete Linie 50 ist somit dN/dt <0.

Da die zeitliche Folge der unterschiedlichen Zylinder spezifischen Phasen 10, 20, 30 bekannt ist (siehe oben), ist aus dem ebenfalls über die gesamte Zeit t gemessenen Drehzahlsignal N auch die Drehzahländerung in den Zylinder spezifischen Verdichtungsphasen 20 der Brennkraftmaschine bestimmbar. Da der Energieverbrauch von Einlass- 10, Arbeits- 30 und Auslassphase 40 als konstant angenommen wird (siehe oben), ergeben sich Schwankungen bei der Drehzahlabnahme durch unterschiedliche Zylinder spezifische Verdichtungsraten bzw. unterschiedlich große Zylinder spezifische Luftmengen, die in den unterschiedlichen Zylindern Z1, Z2, Z3, Z4 verdichtet werden. Dieser Zusammenhang ist durch die durchgezogene Linie 60 und die eingekreisten Bereiche 70 in Fig. 1 veranschaulicht. Der Bereich 70 bezeichnet die Verdichtungsphase 20 des Zylinders Z2 und die daraus resultierende Zylinder spezifische Drehzahländerung im Zeitfenster zwischen T2 und T3. Für einen Zylinder mit höherer Verdichtungsarbeit ist somit die Drehzahlabnahme größer als für einen Zylinder mit niedrigerer Verdichtungsarbeit.

Vergleicht man daher die Drehzahlabnahme in den Zylinder spezifischen Verdichtungsphasen 20 der Brennkraftmaschine, ergeben sich Unterschiede in den Zylinder spezifischen Verdichtungsraten bzw. in der Zylinder spezifischen Verdichtungsarbeit der einzelnen Zylinder Z1, Z2, Z3, Z4 der Brennkraftmaschine im Vergleich zueinander. Nutzt man diese Informationen, um die in den Zylindern Z1, Z2, Z3, Z4 vorhandene Menge an Luft/Gas und den wirkenden Zylinder spezifischen Druck zu bestimmen und anzupassen, wird auf diese Weise das Zylinder spezifische Luft-Kraftstoff-Gemisch optimiert und dadurch die schädlichen Abgase reduziert. Zuzuführende Zylinder spezifische Luft- und Kraftstoffmengen werden auf dieser Grundlage genauer eingestellt, was sich positiv auf die Verbrennungseffektivität, -temperatur, die Zusammensetzung der Abgase der Brennkraftmaschine und die Kontrolle des spezifischen Zylinderverhaltens auswirkt.

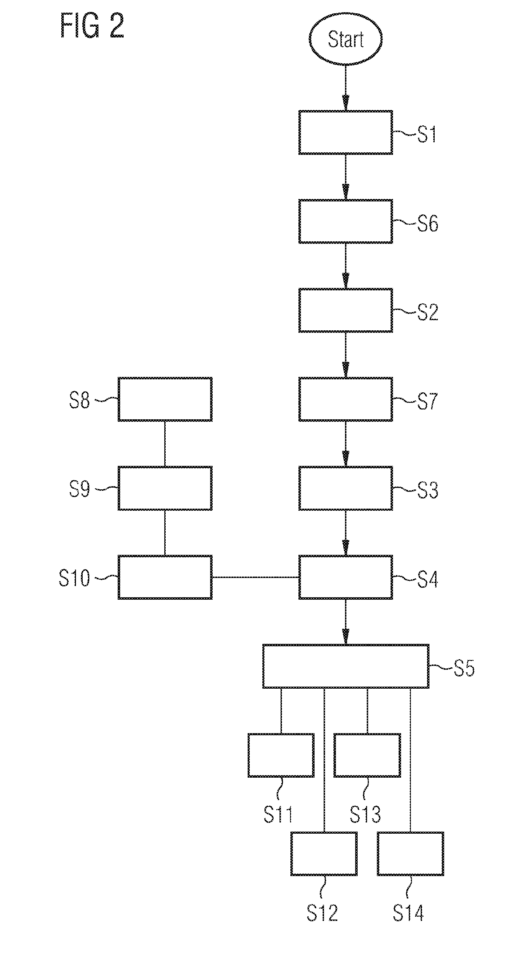

Ein Flussdiagramm einer bevorzugten Ausführungsform des obigen Adaptionsverfahrens ist in Fig. 2 dargestellt. Nach dem Start des Adaptionsverfahrens erfolgt zunächst in einem ersten Schritt S1 ein Erkennen einer Schubphase der Brennkraftmaschine, innerhalb derer das Adaptionsverfahren durchgeführt wird. Innerhalb dieser Schubphase wird die Drehzahl der Brennkraftmaschine in Abhängigkeit von der Zeit mit ausreichender Genauigkeit für das Adaptionsverfahren erfasst (Schritt S6). Die erfasste Drehzahl N in Abhängigkeit von der Zeit stellt die Grundlage dar, um die Drehzahländerung dN/dt in Abhängigkeit von der Zeit zu berechnen (Schritt S2). Dieser Schritt wird beispielsweise in einer Motorsteuerung der Brennkraftmaschine realisiert.

Um die Drehzahländerung in den Zylinder spezifischen Verdichtungsphasen 20 auswerten zu können, wird das zeitliche Auftreten der Zylinder spezifischen Verdichtungsphasen 20 der Brennkraftmaschine erfasst bzw. erkannt. Es ist ebenfalls denkbar, dass die Zeitpunkte der Zylinder spezifischen Verdichtungsphasen 20 der Brennkraftmaschine aus einer Motorsteuerung ausgelesen werden (Schritt S7). Basierend auf der bekannten Drehzahländerung in Abhängigkeit von der Zeit und dem zeitlichen Auftreten der Zylinder spezifischen Verdichtungsphasen 20 werden im Schritt S3 die zeitlichen Drehzahländerungen den Zylinder spezifischen Verdichtungsphasen 20 zugeordnet.

Ausgehend von obiger Zuordnung ermittelt das Adaptionsverfahren die Zylinder spezifische Luft/Gasfüllung basierend auf der zugeordneten zeitlichen Drehzahländerung der Zylinder spezifischen Verdichtungsphasen 20 (Schritt S4). Die Zylinder spezifischen Luft/Gasfüllung ist beispielsweise auf Grundlage eines funktionellen Zusammenhangs zwischen der Drehzahländerung in der Zylinder spezifischen Verdichtungsphase 20 und der Zylinder spezifischen Luft/Gasfüllung bestimmbar. Sie erfordert, dass dieser funktionelle Zusammenhang aufgestellt und beispielsweise in der Motorsteuerung der Brennkraftmaschine abgelegt wird (Schritt S10).

Gemäß einer Alternative des vorliegenden Adaptionsverfahrens basiert der funktionelle Zusammenhang auf einem Kalibrieren der Verdichtungsarbeit in Abhängigkeit von der Luft/Gasfüllung der einzelnen Zylinder (Schritt S8). Es ist des Weiteren denkbar, die Drehzahländerung der Brennkraftmaschine in Abhängigkeit von der Verdichtungsarbeit eines Zylinders zu kalibrieren (Schritt S9). Auf Grundlage der obigen Kalibrierschritte S8, S9 ist somit der funktionelle Zusammenhang zwischen der Drehzahländerung der Brennkraftmaschine und der Zylinder spezifischen Luft/Gasfüllung in der Verdichtungsphase mit ausreichender Genauigkeit beschreibbar.

Nachdem die Zylinder spezifische Luft/Gasfüllung ermittelt worden ist (Schritt S4), geht diese Information in die Gestaltung der Zylinder spezifischen Verbrennung der Brennkraftmaschine ein. Zu diesem Zweck wird ein Zylinder spezifisches Kraftstoff/Luft-Gemisch basierend auf der Zylinder spezifischen Luft/Gasfüllung angepasst (Schritt S5). Dieses Anpassen wird bevorzugt gemäß unterschiedlicher Alternativen durchgeführt. Gemäß Schritt S11 erfolgt ein Anpassen der Kraftstoff-Einspritzmenge. Gemäß Schritt S12 werden die Ventilzeiten für den Lufteinlass angepasst. Gemäß Schritt S13 erfolgt ein Anpassen der Druckverhältnisse im Lufteinlasstrakt des jeweiligen Zylinders. Gemäß einer weiteren Alternative erfolgt ein Anpassen der Geometrie des Lufteinlasses, sofern diese veränderbar ist (Schritt S14).

Im Folgenden sind die einzelnen Schritte des Adpationsverfahrens gemäß Fig. 2 noch einmal zusammenfassend aufgelistet:
- S1: Erkennen einer Schubphase
- S2: Bestimmen der Drehzahländerung in Abhängigkeit von der Zeit
- S3: Zuordnen der zeitlichen Drehzahländerung zu den Zylinder spezifischen Verdichtungsphasen
- S4: Ermitteln einer Zylinder spezifischen Luft/Gasfüllung basierend auf der zugeordneten zeitlichen Drehzahländerung
- S5: Anpassen eines Zylinder spezifischen Kraftstoff-LuftGemischs basierend auf der Zylinder spezifischen Luft/Gasfüllung
- S6: Erfassen der Drehzahl in Abhängigkeit von der Zeit
- S7: Erkennen des zeitlichen Auftretens der Zylinder spezifischen Verdichtungsphasen der Brennkraftmaschine
- S8: Kalibrieren der Verdichtungsarbeit in Abhängigkeit von der Luft/Gasfüllung eines Zylinders
- S9: Kalibrieren der Drehzahländerung in Abhängigkeit von der Verdichtungsarbeit
- S10: Aufstellen eines funktionellen Zusammenhangs zwischen der Drehzahländerung und der Zylinder spezifischen Luft/Gasfüllung in der Verdichtungsphase
- S11: Anpassen der Kraftstoff-Einspritzmenge
- S12: Anpassen der Ventilzeiten für den Lufteinlass
- S13: Anpassen der Druckverhältnisse im Lufteinlasstrakt
- S14: Anpassen der Geometrie des Lufteinlasses

## Patentansprüche

1. Adaptionsverfahren einer Brennkraftmaschine zur optimierten Verbrennung einer in einem Zylinder eingespritzten Kraftstoffmenge, das die folgenden Schritte aufweist:
a. Erkennen einer Schubphase der Brennkraftmaschine (S1),
b. Bestimmen einer zeitlichen Drehzahländerung der Brennkraftmaschine innerhalb der Schubphase (S2) und Zuordnen der zeitlichen Drehzahländerung zu einer Zylinder spezifischen Verdichtungsphase der Brennkraftmaschine (S3),
c. Ermitteln einer Zylinder spezifischen Luft/Gasfüllung ausgehend von der zeitlichen Drehzahländerung in der Zylinder spezifischen Verdichtungsphase (S4) und
d. Anpassen eines Zylinder spezifischen Kraftstoff-Luft-Gemischs basierend auf der ermittelten Zylinder spezifischen Luft/Gasfüllung (S5).

2. Adaptionsverfahren gemäß Anspruch 1, das den weiteren Schritt aufweist:
Erfassen der Drehzahl der Brennkraftmaschine in Abhängigkeit von der Zeit (S6) und
Erfassen der Zylinder spezifischen Verdichtungsphasen der Brennkraftmaschine in Abhängigkeit von der Zeit (S7).

3. Adaptionsverfahren gemäß Anspruch 1 oder 2, das den weiteren Schritt aufweist:
Kalibrieren der Verdichtungsarbeit eines Zylinders in Abhängigkeit von seiner Luft/Gasfüllung (S8).

4. Adaptionsverfahren gemäß Anspruch 3, das den weiteren Schritt aufweist:
Kalibrieren der Drehzahländerung in Abhängigkeit von der Verdichtungsarbeit (S9).

5. Adaptionsverfahren gemäß einem der vorhergehenden Ansprüche, das den weiteren Schritt aufweist:
Aufstellen eines funktionellen Zusammenhangs zwischen der Drehzahländerung und der Zylinder spezifischen Luft/Gasfüllung in der Verdichtungsphase (S10).

6. Adaptionsverfahren gemäß einem der vorhergehenden Ansprüche, das den weiteren Schritt zum Anpassen des Zylinder spezifischen Kraftstoff-Luft-Gemischs aufweist:
Anpassen der Kraftstoff-Einspritzmenge (S11) und/oder
Anpassen der Ventilöffnungszeiten für den Lufteinlass (S12) und/oder
Anpassen der Druckverhältnisse im Lufteinlasstrakt (S13) und/oder
Anpassen der Geometrie des Lufteinlasstrakts (S14).
